# EUROPÄISCHE PATENTSCHRIFT

(11) **EP 4 558 242 B1**
(45) Veröffentlichungstag und Bekanntmachung des Hinweises auf die Patenterteilung: **29.04.2026**
(21) Anmeldenummer: 22755095.1
(22) Anmeldetag: 20.07.2022
(51) Int. Cl.: B01D 19/04, C08G 77/14, C08L 83/04, C11D 1/66, C11D 3/00, C11D 3/20, C11D 3/37, C11D 17/00

(54) **ENTSCHÄUMERZUSAMMENSETZUNGEN FÜR WASCHMITTEL**
DEFOAMER COMPOSITIONS FOR DETERGENTS
COMPOSITIONS ANTIMOUSSES POUR DÉTERGENTS

(43) Veröffentlichungstag der Anmeldung: 28.05.2025
(73) Patentinhaber: Wacker Chemie AG, 81671 München (DE)
(72) Erfinder: BREHM, Christof, 84489 Burghausen (DE); MEIER, Andreas, 84508 Burgkirchen (DE)
(86) Internationale Anmeldenummer: PCT/EP2022/070382
(87) Internationale Veröffentlichungsnummer: WO 2024/017471

(56) Entgegenhaltungen:
- CN-A- 112 312 987
- US-A- 6 165 968
- US-A1- 2009 137 446

## Beschreibung

Die Erfindung betrifft Entschäumerpulver, welche neben einer Entschäumerformulierung, eine wachsartige nicht-silicon-haltige Komponente, ein Polycarboxylat-Bindemittel sowie ein pulverförmiges, in Wasser lösliches Trägermaterial enthält, deren Herstellmethode sowie deren Verwendung zum Entschäumen von Medien, vorzugsweise wässrigen Medien, insbesondere wässrigen Tensidformulierungen.

In vielen flüssigen, insbesondere wässrigen Systemen, die als erwünschte oder auch unerwünschte Bestandteile oberflächenaktive Verbindungen enthalten, können durch Schaumbildung Probleme auftreten, wenn diese Systeme in mehr oder weniger intensivem Kontakt mit gasförmigen Stoffen gebracht werden, beispielsweise beim Begasen von Abwässern, beim intensiven Rühren von Flüssigkeiten, bei Destillations-, Wasch- oder Färbeprozessen oder bei Abfüllvorgängen.

Die Bekämpfung dieses Schaumes kann auf mechanischem Wege oder durch den Zusatz von Entschäumern erfolgen. Dabei haben sich Entschäumer auf Siloxanbasis besonders bewährt. Entschäumer auf Basis von Siloxanen werden beispielsweise nach US 3383327 A durch Erhitzen von hydrophiler Kieselsäure in Polydimethylsiloxanen hergestellt. Auch Polyorganosiloxane mit seitenständigen längerkettigen n-Alkyl-Gruppen sind als Basis zur Herstellung effektiver Entschäumer in US 2009/0137446 A1 beschrieben.

In der Anwendung fester Produkte, wie beispielsweise in Wasch-und Reinigungsmitteln, in agrochemischen Erzeugnissen und in pharmazeutischen Formulierungen werden vorrangig pulverförmige Entschäumer verwendet. Dabei ist es günstig, die normalerweise als ölartige, viskose Flüssigkeiten vorliegenden Entschäumer in Pulverform zu überführen, was durch Adsorption des Entschäumers an feste Trägermaterialien erfolgen kann. Von besonderem Vorteil ist es im Falle des Einsatzes in Waschpulvern, wenn die eingesetzten Trägermaterialien den Waschprozess nicht behindern bzw. selbst Waschmittelbestandteile sind. Den meisten der durch einfaches Aufbringen der Entschäumer auf ein Trägermaterial erhaltenen Entschäumerpulver ist gemeinsam, dass sie, insbesondere in Gegenwart alkalisch wirkender Verbindungen, bei Lagerung schnell an Wirksamkeit verlieren.

Um diesem Nachteil entgegenzuwirken, wurden verschiedene Lösungen vorgeschlagen. Eine mögliche Lösung beinhaltet die Verkapselung bzw. Umhüllung des Trägermaterials mit dem Ziel der besseren Fixierung des Entschäumers. EP 0 995 473 A1 schlägt zu diesem Zweck die Verwendung saurer Polycarboxylate in Kombination mit Polyether-funktionalisierten Polysiloxanen auf dem Trägermaterial Zeolith vor.

In EP 0 210 731 A2 ist die Verwendung von Monoestern von Glycerin als wachsartigen Additiven beschrieben. Eine Lagerstabilität kann gezeigt werden, wenn die beschriebenen Monoester von Glycerin im Überschuss zum Polydimethylsiloxanbasierten Entschäumer eingesetzt werden.

Entschäumer basierend auf seitenständig mit alpha-Methylstyryl-Gruppen funktionalisierten Polyorganosiloxanen geträgert auf Natriumcarbonat, Stärke oder Zeolith werden in WO 2004/018073 A1 beschrieben, wobei als Additiv zwingend ein Glycerintriester, wie Glycerintristearat, verwendet wird. Die Additive haben einen positiven Effekt auf die Wirksamkeit der Entschäumerpulver in der Anwendung der Schaumkontrolle von Waschpulvern. Eine Aussage über eine Lagerstabilität wird nicht getroffen.

WO 2004/018074 A1 beschreibt Entschäumerpulver, in denen ebenfalls wachsartige Glycerintriester als Additiv eingesetzt werden. Zum Teil in Kombination mit weiteren polareren Additiven, beispielsweise Glycerinmonoester, Alkylphenole, Fettalkohole oder Fettsäuren, werden die Glycerintriester zusammen mit dem Entschäumer auf einen Träger, insbesondere Natriumcarbonat oder Stärke, gesprüht. Die Menge an Additiven liegt bei mindestens 50 Gew.-% bezogen auf den Entschäumer. Auch hier konnte ein positiver Effekt auf die Wirksamkeit der Entschäumerpulver in der Anwendung der Schaumkontrolle von Waschpulvern gezeigt werden. Eine Aussage bezüglich der Lagerstabilität wird ebenfalls nicht getroffen.

Der Nachteil der beschriebenen Lösungen besteht in den zum Teil erheblichen Mengen der zusätzlich benötigten organischen Additiven, ihrer noch mangelnden Lagerstabilität in einer festen Tensidmatrix sowie ihrer nicht optimalen wässrigen Löslichkeit bzw. wässrigen Dispergierbarkeit.

Aufgabe der Erfindung war es daher, Entschäumerpulver bereitzustellen, welche neben der Entschäumerformulierung und dem Trägermaterial nur geringe Mengen zusätzlicher Bestandteile enthalten, eine hervorragende Lagerstabilität sowie eine ausgezeichnete wässrige Löslichkeit bzw. Dispergierbarkeit aufweisen. Insbesondere sollen die hergestellten Entschäumerpulver in Wasch- und Reinigungsmitteln verwendbar sein.

Gegenstand der Erfindung sind Entschäumerpulver, enthaltend
(A) 100 Gew.-Teile einer Entschäumerformulierung, enthaltend
(Aa) ein Polysiloxan enthaltend Einheiten der Formel (I)

   R¹R²SiO_{2/2} (I),

   worin
   R¹ gleich oder verschieden ist und einen einwertigen, gegebenenfalls verzweigten, SiC-gebundenen Kohlenwasserstoffrest mit 1 bis 5 C-Atomen bedeutet,
   R² gleich oder verschieden ist und einen einwertigen, gegebenenfalls verzweigten, SiC-gebundenen Kohlenwasserstoffrest mit 6 bis 30 C-Atomen bedeutet,
(Ab) ein Füllstoff,
(Ac)ein Organopolysiloxanharz aus Einheiten der allgemeinen Formel

   R³ₐ(R⁴O)_{b}SiO_{(4-a-b)/2} (II),

   worin
   R³ gleich oder verschieden ist und einen einwertigen, gegebenenfalls substituierten, SiC-gebundenen Kohlenwasserstoffrest mit 1 bis 30 C-Atomen bedeutet,
   R⁴ gleich oder verschieden ist und ein Wasserstoffatom oder einen einwertigen, gegebenenfalls substituierten Kohlenwasserstoffrest mit 1 bis 4 C-Atomen bedeutet,
   a 0, 1, 2 oder 3 ist und
   b 0, 1, 2 oder 3 ist,
   mit der Maßgabe, dass die Summe a + b ≤ 3 ist und in weniger als 50% aller Einheiten der Formel **(II)** im
   Organopolysiloxanharz die Summe a + b = 2 ist, gegebenenfalls
(Ad) ein weiteres Organopolysiloxan bestehend aus Einheiten der Formel (III) und (IV)

   R¹₂SiO_{2/2} (III),

   R⁵R¹₂SiO_{1/2} (IV),

   worin
   R¹ die oben dafür angegebene Bedeutung hat,
   R⁵ gleich oder verschieden sein kann und R¹ oder -OR⁶ sein kann, wobei
   R⁶ ein Wasserstoffatom oder einen einwertigen, gegebenenfalls substituierten Kohlenwasserstoffrest mit 1 bis 25 C-Atomen bedeutet, gegebenenfalls
   (Ae) eine wasserunlösliche organische Verbindung, gegebenenfalls
   (Af) einen alkalischen oder sauren Katalysator oder dessen Umsetzungsprodukt mit den Komponenten (Aa) bis (Ad)
   (B) 10 bis 45 Gew.-Teile bezogen auf 100 Gew.-Teile der Entschäumerformulierung (A) eines wachsartigen Additivs, enthaltend einen Monoester (B') aus Glycerin und einer Fettsäure,
      das frei von einem Polysiloxan-haltigen Additiv ist und das weniger als 5 Gew.-% eines Triesters (B'') aus Glycerin und einer Fettsäure enthält,
   (C) 10 bis 50 Gew.-Teile bezogen auf 100 Gew.-Teile der Entschäumerformulierung (A) eines Polycarboxylat-Bindemittels, das einen pH von 3 oder weniger aufweist, wenn es in Wasser gelöst ist.
   (D)120 bis 5000 Gew.-Teile bezogen auf 100 Gew.-Teile der Entschäumerformulierung (A) mindestens eines pulverförmigem Trägermaterials, mit der Maßgabe, dass das Trägermaterial weniger als 50 Gew.-% alkalisches Trägermaterial, vorzugsweise weniger als 40 Gew.-% alkalisches Trägermaterial, bevorzugt weniger als 25 Gew.-% alkalisches Trägermaterial enthält.

Unter dem Begriff Entschäumerpulver sind sowohl pulverförmige wie auch granulierte Produkte zu verstehen.

Überraschenderweise wurde nun gefunden, dass die derart zusammengesetzten Entschäumerpulver sich durch eine deutlich verbesserte Lagerstabilität in Waschpulvern wie auch eine deutlich verbesserte Wasserlöslichkeit bzw. Wasserdispergierbarkeit in der Waschlauge bei gleichzeitig geringem Einsatz an zusätzlichen Agentien gegenüber dem Stand der Technik auszeichnen.

Die erfindungsgemäßen Entschäumerpulver enthalten vorzugsweise 10 bis 42 Gew.-Teile des wachsartigen Additivs (B), 10 bis 47 Gew.-Teile des Polycarboxylat-Bindemittels (C) sowie 200 bis 2000 Gew.-Teile des pulverförmigen Trägermaterials (D) jeweils bezogen auf 100 Gew.-Teile der Entschäumerformulierung (A) sowie besonders bevorzugt 13 bis 40 Gew.-Teile des wachsartigen Additivs (B), 13 bis 45 Gew.-Teile des Polycarboxylat-Bindemittels (C) sowie 300 bis 1200 Gew.-Teile des pulverförmigen Trägermaterials (D) jeweils bezogen auf 100 Gew.-Teile der Entschäumerformulierung (A).

Die erfindungsgemäßen Entschäumerpulver bestehen vorzugsweise im Wesentlichen aus den Komponenten (A), (B), (C) und (D).

Vorzugsweise besteht die Entschäumerformulierung (A) aus den Komponenten (Aa), (Ab), (Ac) und gegebenenfalls den Komponenten (Ad), (Ae) und (Af).

Vorzugsweise enthalten die Entschäumerformulierungen (A)
(1) mindestens 55 Gew.%, bevorzugt mindestens 65 Gew.%, besonders bevorzugt mindestens 75 Gew.%, und vorzugsweise höchstens 97 Gew.%, bevorzugt höchstens 90 Gew.%, besonders bevorzugt höchstens 85 Gew.% Polysiloxane (Aa),
(2) mindestens 1 Gew.%, bevorzugt mindestens 2 Gew.% , besonders bevorzugt mindestens 3 Gew.%, und vorzugsweise höchstens 15 Gew.%, bevorzugt höchstens 12 Gew.%, besonders bevorzugt höchstens 10 Gew.% Füllstoffe (Ab),
(3) mindestens 1 Gew.%, bevorzugt mindestens 2 Gew.% , besonders bevorzugt mindestens 3 Gew.%, und vorzugsweise höchstens 15 Gew.%, bevorzugt höchstens 12 Gew.%, besonders bevorzugt höchstens 10 Gew.% Organopolysiloxanharze (Ac)aus Einheiten der Formel (II),
(4) mindestens 0 Gew.% und vorzugsweise höchstens 15 Gew.%, bevorzugt höchstens 10 Gew.%, besonders bevorzugt höchstens 7,5 Gew.% Organopolysiloxane (Ad) bestehend aus Einheiten der Formel (III) und (IV),
(5) mindestens 0 Gew.% und vorzugsweise höchstens 15 Gew.%, bevorzugt höchstens 10 Gew.%, besonders bevorzugt höchstens 7,5 Gew.%, wasserunlösliche organische Verbindungen (Ae),
   und
(6) mindestens 0 Gew.%, bevorzugt mindestens 0,05 Gew.%, besonders bevorzugt mindestens 0,1 Gew.%, und vorzugsweise höchstens 1 Gew.%, bevorzugt höchstens 0,5 Gew.%, besonders bevorzugt höchstens 0,3 Gew.%, alkalische oder saure Katalysatoren (Af) oder deren Umsetzungsprodukte mit den Komponenten (Aa) bis (Ad).

Vorzugsweise handelt es sich bei den in den Entschäumerformulierungen (A) eingesetzten Organopolysiloxanen (Aa) um solche der Formel (VIII)

R⁵R¹₂SiO-(SiR¹₂O)ₓ-(SiR¹R²O)_{y}-SiR¹₂R⁵ (VIII),

wobei
R¹, R² und R⁵ die oben dafür angegebene Bedeutung aufweisen,
x größer gleich 0 oder durchschnittlich kleiner 200, vorzugsweise kleiner 100, besonders bevorzugt kleiner 50,
y durchschnittlich größer 5, vorzugsweise größer 10, und kleiner 200, vorzugsweise kleiner 100, besonders bevorzugt kleiner 50 ist.
Organopolysiloxane (Aa) können zusätzlich Verzweigungen aufweisen, indem sie Einheiten der Formel (IX) und (X) enthalten.

   SiO_{4/2} (IX)

   R¹SiO_{3/2} oder R²SiO_{3/2} oder R⁵SiO_{3/2} (X)

   R¹LSiO_{2/2} oder R²LSiO_{2/2} oder R⁵LSiO_{2/2} (XI)

   wobei
   R¹, R² und R⁵ die oben dafür angegebene Bedeutung aufweisen und L eine divalente Struktur darstellt, die zwei Organopolysiloxan-Ketten miteinander verknüpft.
   Bei L kann es sich um eine Alkylen-Gruppe, wie z.B. eine Ethylen-, eine Propylen-, eine Butylen-, eine Hexylen-, eine Octylen-Gruppe, bevorzugt eine Hexylen- oder Octylen-Gruppe, eine divalente aromatische Gruppe, wie die 1,2-Bis-ethylen-benzene-, die 1,4-Bis-ethylen-benzene-Gruppe oder die 1,8-Bis-ethylen-naphtalin-Gruppe, eine Cycloalkylen-Gruppe, wie die 1,4-Bisethylen-cyclohexan-Gruppe oder eine divalente Organosiloxan-Kette handeln.

Beispiele für Kohlenwasserstoffreste R¹ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; und Cycloalkylreste, wie der Cyclopentylrest.

Bevorzugte Beispiele für R¹ sind Methyl- und Ethylreste. Ein besonders bevorzugtes Beispiel ist der Methylrest.

Beispiele für Kohlenwasserstoffreste R² sind Alkylreste, beispielsweise Hexylreste, wie der n-Hexylrest, Heptylreste, wie der n-Heptylrest, Octylreste, wie der n-Octylrest und iso-Octylreste, wie der 2,2,4-Trimethylpentyl- und der 2-Ethylhexylrest, Nonylreste, wie der n-Nonylrest, Decylreste, wie der n-Decylrest, Dodecylreste, wie der n-Dodecylrest, Tetradecylreste, wie der n-Tetradecylrest, Hexadecylreste, wie der n-Hexadecylrest und Octadecylreste, wie der n-Octadecylrest; Cycloalkylreste, wie der Cyclohexyl-, Cycloheptyl-, Methylcyclohexyl- und 4-Ethylcyclohexylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der 2-Phenylpropylrest und der alpha- und der beta-Phenylethylrest.

Bevorzugte Beispiele für R² sind der n-Octylrest, der n-Decylrest, der n-Dodecylrest, der n-Tetradecylrest, der n-Hexadecylrest, der n-Octadecylrest, der Phenylrest, der Benzylrest und der 2-Phenylpropylrest. Besonders bevorzugte Beispiele sind der n-Octylrest, der n-Dodecylrest, der Phenylrest und der 2-Phenylpropylrest.

Beispiele, bevorzugte Beispiele und besonders bevorzugte Beispiele für R⁵ sind die Beispiele, bevorzugten Beispiele und besonders bevorzugten Beispiele für R¹ oder Reste der Formel -OR⁶.

Beispiele für R⁶ sind das Wasserstoffatom oder Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentyl-und der 2-Ethylhexylrest, Nonylreste, wie der n-Nonylrest, Decylreste, wie der n-Decylrest, Dodecylreste, wie der n-Dodecylrest, Tetradecylreste, wie der n-Tetradecylrest, Hexadecylreste, wie der n-Hexadecylrest und Octadecylreste, wie der n-Octadecylrest; Cycloalkylreste, wie der Cyclopentyl-, Cyclohexyl-, Cycloheptyl-, Methylcyclohexyl- und 4-Ethylcyclohexylrest.

Bevorzugte Beispiele für R⁶ sind das Wasserstoffatom oder Methyl- und Ethylreste.

Besonders bevorzugte Beispiele sind das Wasserstoffatom oder der Methylrest.

Vorzugsweise weisen die in den Entschäumerformulierungen (A) eingesetzten Füllstoffe (Ab) eine BET-Oberfläche von 20 bis 1000 m²/g auf. Vorzugsweise weisen die Füllstoffe (Ab) eine Partikelgröße von weniger als 10 µm und eine Agglomeratgröße von weniger als 100 µm auf.

Beispiele für Füllstoffe (Ab) sind Siliciumdioxid (Kieselsäuren), Titandioxid, Aluminiumoxid, Metallseifen, Quarzmehl, PTFE-Pulver, Fettsäureamide, z. B. Ethylenbisstearamid, und fein verteilte hydrophobe Polyurethane.

Vorzugsweise werden als Füllstoffe (Ab) Siliciumdioxid (Kieselsäuren), Titandioxid oder Aluminiumoxid mit einer BET-Oberfläche von 20 bis 1000 m²/g eingesetzt. Vorzugsweise weisen diese Füllstoffe eine Partikelgröße von weniger als 10 µm und eine Agglomeratgröße von weniger als 100 µm auf.

Bevorzugt als Füllstoffe (Ab) sind Kieselsäuren, insbesondere solche mit einer BET-Oberfläche von 50 bis 800 m²/g. Diese Kieselsäuren können pyrogene oder gefällte Kieselsäuren sein. Es sind als Füllstoffe (Ab) sowohl vorbehandelte Kieselsäuren einsetzbar, also hydrophobe Kieselsäuren, als auch hydrophile Kieselsäuren. Beispiele für handelsübliche hydrophobe Kieselsäuren, die erfindungsgemäß eingesetzt werden können, sind HDK^{®} H2000, eine pyrogene mit Hexamethyldisilazanen behandelte Kieselsäure mit einer BET-Oberfläche von 140 m²/g (käuflich erhältlich bei der Wacker Chemie AG, Deutschland) und eine gefällte mit Polydimethylsiloxan behandelte Kieselsäure mit einer BET-Oberfläche von 90 m²/g (käuflich erhältlich unter der Bezeichnung "Sipernat^{®} D10" bei der Fa. Evonik, Deutschland).

Hydrophile Kieselsäuren können auch in situ hydrophobiert werden, wenn das für die gewünschte Wirksamkeit der Entschäumerformulierung vorteilhaft ist. Verfahren zur Hydrophobierung von Kieselsäuren sind vielfach bekannt. Die in situ Hydrophobierung der hydrophilen Kieselsäure kann dabei z. B. durch mehrstündiges Erhitzen der in der Komponente (Aa) oder in einer Mischung aus den Komponenten (Aa), (Ac), gegebenenfalls (Ad) und gegebenenfalls (Ae) dispergierten Kieselsäure auf Temperaturen von 100 bis 200°C erfolgen. Dabei kann die Reaktion gegebenenfalls durch den Zusatz von Katalysatoren (Af) und von Hydrophobiermitteln, wie kurzkettigen OH-terminierten Polydimethylsiloxanen, Silanen oder Silazanen unterstützt werden.

Bei der in den Entschäumerformulierungen (A) eingesetzten Komponente (Ac) handelt es sich vorzugsweise um Siliconharze aus Einheiten der Formel (II), bei denen vorzugsweise in weniger als 30%, bevorzugt in weniger als 5%, der Einheiten im Harz die Summe a+b gleich 2 ist.

Vorzugsweise bedeutet R³ einen Kohlenwasserstoffrest mit 1 bis 30 Kohlenstoffatomen.

Beispiele für Kohlenwasserstoffreste R³ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentyl-und der 2-Ethylhexylrest, Nonylreste, wie der n-Nonylrest, Decylreste, wie der n-Decylrest, Dodecylreste, wie der n-Dodecylrest, Tetradecylreste, wie der n-Tetradecylrest, Hexadecylreste, wie der n-Hexadecylrest und Octadecylreste, wie der n-Octadecylrest; Cycloalkylreste, wie der Cyclopentyl-, Cyclohexyl-, Cycloheptyl-, Methylcyclohexyl- und 4-Ethylcyclohexylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der 2-Phenylpropylrest und der alpha- und der beta-Phenylethylrest.

Bevorzugte Beispiele für Reste R³ sind der Methyl-, Ethyl- und Phenylrest.

Ein besonders bevorzugtes Beispiel für den Rest R³ ist der Methylrest.

Beispiele für Reste R⁴ sind das Wasserstoffatom und Alkylreste, wie der Methyl-, Ethyl-, n-Propyl-, iso-Propyl- und n-Butylrest.

Bevorzugt ist der Rest R⁴ ein Wasserstoffatom oder ein Methyl-oder Ethylrest.

Bevorzugt handelt es sich bei den Organopolysiloxanharzen (Ac) aus Einheiten der Formel (II) um
MQ-Harze aus Einheiten der Formeln

   SiO₂ (IX)

   und

   R³₃SiO_{1/2} (XII),
wobei R³ die oben dafür angegebene Bedeutung hat.

Das molare Verhältnis von M- zu Q-Einheiten liegt dabei vorzugsweise im Bereich von 0,5 bis 2,0, bevorzugt im Bereich von 0,6 bis 1,0. Neben den M- und Q-Einheiten können die MQ-Harze gegebenenfalls noch geringe Mengen an R³SiO_{3/2} oder (R⁴O)SiO_{3/2} (T)-Einheiten oder R³₂SiO_{2/2} (D)-Einheiten, in Mengen von vorzugsweise 0,01 bis 20 Mol%, bevorzugt 0,01 bis 5 Mol %, bezogen auf die Summe aller Siloxaneinheiten, enthalten, wobei R³ und R⁴ die oben dafür angegebene Bedeutung haben. Diese MQ-Harze können außerdem bis zu 10 Gew.-% freie Si-gebundene Hydroxy- oder Alkoxygruppen, wie Methoxy- oder Ethoxygruppen, enthalten.

Vorzugsweise haben diese Organopolysiloxanharze (Ac) bei 25°C und 101,425 kPa eine Viskosität größer 1000 mPa·s oder sind Feststoffe. Das mit Gelpermeationschromatografie bestimmte gewichtsmittlere Molekulargewicht (bezogen auf einen Polystyrolstandard) dieser Harze beträgt vorzugsweise 200 bis 200 000 g/mol, insbesondere 1000 bis 20 000 g/mol.

In den Entschäumerformulierungen (A) können gegebenenfalls Organopolysiloxane (Ad) eingesetzt werden, die verschieden von Polysiloxanen (Aa) sind.

Vorzugsweise handelt es sich bei den Organopolysiloxanen (Ad) um solche der Formel (IXX)

R⁵R¹₂SiO-(SiR¹₂O)_{z}-SiR¹₂R⁵ (IXX),

wobei
R¹ und R⁵ die oben dafür angegebene Bedeutung aufweisen,
z durchschnittlich größer 5, vorzugsweise größer 10, und kleiner 500, vorzugsweise kleiner 200, besonders bevorzugt kleiner 100 ist.

In den Entschäumerformulierungen (A) können gegebenenfalls wasserunlösliche organische Verbindungen (Ae) eingesetzt werden.

Unter dem Begriff "wasserunlöslich" soll im Sinne der vorliegenden Erfindung eine Löslichkeit in Wasser bei 25°C und einem Druck von 101,425 kPa von maximal 3 Gewichtsprozenten verstanden werden.

Bei der gegebenenfalls eingesetzten Komponente (Ae) handelt es sich vorzugsweise um wasserunlösliche organische Verbindungen mit einem Siedepunkt größer als 100°C bei dem Druck der umgebenden Atmosphäre, also bei 900 bis 1100 hPa und einem Schmelzpunkt von kleiner 35°C, insbesondere um solche, ausgewählt aus Mineralölen, nativen Ölen, Isoparaffinen, Polyisobutylenen, Rückständen aus der Oxoalkoholsynthese, Estern niedermolekularer synthetischer Carbonsäuren, wie z.B. Pentandiol-1,3-diisobutyrat, Fettsäureestern, wie z.B. Octylstearat, Octyloleat, iso-Propyllaurat, Methyllaurat oder iso-Propylmyristat, bei Temperaturen größer 35°C flüssigen Fettalkoholen, Ethern niedermolekularer Alkohole, Phthalaten und Estern der Phosphorsäure.

Beispiele für alkalische Katalysatoren (Af) sind Alkali- und Erdalkalihydroxide, wie NaOH, KOH, CsOH, LiOH und Ca(OH)₂. Beispiele für saure Katalysatoren (Af) sind Salzsäure, Schwefelsäure und Phosphornitrilchloride.

Bei den Umsetzungsprodukten von (Af) mit den Komponenten (Aa) bis (Ad) handelt es sich beispielsweise um das Produkt aus der als Füllstoff (Ab) bevorzugten Kieselsäure mit

Alkalihydroxiden, wie z.B. Kaliumsilicat oder Natriumsilicat. Die Dosierung der Katalysatoren kann in typischen organischen Lösemitteln wie Alkoholen (wie z.B. Methanol, Ethanol, Isopropanol) oder Estern (wie z.B. Essigsäureethylester) erfolgen.

Bei den in den Entschäumerformulierungen (A) eingesetzten Komponenten (Aa) bis (Af) kann es sich jeweils um eine Art einer solchen Komponente wie auch um ein Gemisch aus mindestens zwei Arten einer jeweiligen Komponente handeln.

Die Entschäumerformulierungen (A) haben eine Viskosität von vorzugsweise 100 bis 2 000 000 mPa·s, bevorzugt von 500 bis 80 000 mPa·s, besonders bevorzugt von 1000 bis 15 000 mPa·s, jeweils bei 25°C und 101,425 kPa.

Das Herstellen der erfindungsgemäßen Entschäumerformulierungen (A) kann nach bekannten Verfahren, wie durch Mischen aller Komponenten erfolgen, wie z. B. unter Anwendung von hohen Scherkräften in Kolloidmühlen, Dissolvern oder Rotor-Stator-Homogenisatoren. Dabei kann der Mischvorgang bei reduziertem Druck erfolgen, um das Einmischen von Luft, welche z. B. in hochdispersen Füllstoffen enthalten ist, zu verhindern. Im Anschluss kann bei Bedarf die in situ Hydrophobierung der Füllstoffe erfolgen.

Es ist auch möglich erst die Komponente (Aa) vorzulegen und ggf. zu erhitzen und dann sukzessive die Komponenten (Ab), (Ac), ggf. (Ad), ggf. (Ae) und ggf. (Af) zuzugeben.

In einer bevorzugten Ausführungsform wird Komponente (Ac) in gelöster Form als Lösung in Komponente (Ad) oder (Ae) oder Teilen der Komponente (Ad) oder (Ae) zugegeben.

Bei dem eingesetzten wachsartigen Additiv (B) handelt es sich um ein organisches Material mit einem Schmelzpunkt im Bereich von 35 bis 85°C, dessen Hauptbestandteil ein Monoester aus Glycerin und einer Fettsäure ist (auch als 1-Monoacylglycerin bezeichnet).

Insbesondere handelt es sich um Monoester von Glycerin und aliphatischen Fettsäuren mit einer Kohlenstoffkette, die 12 bis 20 Kohlenstoffatome enthält. Dies umfasst sowohl Produkte in ihrer racemischen wie auch optisch aktiven Form. Beispiele für derartige Monoester sind Glycerinmonolaurat, Glycerinmonomyristat, Glycerinmonopalmitat und Glycerinmonostearat. Ein besonders bevorzugtes Beispiel eines Monoesters ist Glycerinmonostearat.

Bei dem eingesetzten wachsartigen Additiv (B) kann es sich um ein organisches Material mit einem Schmelzpunkt im Bereich von 35 bis 85°C handeln, das herstellungsbedingt eine Mischung aus mehreren Komponenten ist, wobei die Hauptkomponente ein Monoester aus Glycerin und einer Fettsäure ist.

So stellen technische Produkte an 1-Monoacylglycerinen in der Regel Mischungen aus einem 1-Monoacylglycerin und einem Diacylglycerin mit unterschiedlichem Monoacylglycerin-Gehalt dar. Ferner können diese technischen Produkte auch geringe Anteile an Triacylycerin, freiem Glycerin und auch freier Fettsäure enthalten.

Im Falle des Glycerinmonostearat handelt es sich zumeist um eine Mischung aus Glycerinmonostearat, Glycerindistearat und gegebenenfalls Glycerinmonopalmitat sowie geringen Anteilen an Glycerintristearat wie auch freiem Glycerin (im Falle von nicht-emulgierendem oder nicht-selbstemulgierendem Glycerinmonostearat) bzw. auch einer bestimmten Menge an Seife (im Falle von selbstemulgierendem Glycerylmonostearat).

Bei dem eingesetzten wachsartigen Additiv (B) kann es sich auch um ein organisches Material mit einem Schmelzpunkt im Bereich von 35 bis 85°C handeln, bei dem bewusst dem Monoester aus Glycerin und einer Fettsäure als Hauptkomponente ein zusätzliches wachsartiges organisches Material zugesetzt wurde. Dieses zusätzliche wachsartige organische Material, bei dem es sich um keinen Ester aus Fettsäure und Glycerin handelt, weist einen Schmelzpunkt im Bereich von 35 bis 85°C auf.

Beispiele für ein zusätzliches wachsartiges Material sind teilsynthetische Wachse wie Amidwachse (beispielsweise Stearinsäureamid, Behensäureamid, Erucasäureamid, Ölsäureamid), Alkoholwachse oder Ketonwachse oder synthetische Wachse wie Polyolefinwachse oder wachsartige Kohlenwasserstoffe (beispielsweise Hartparaffine mit einem Schmelzpunkt von 50 bis 62°C) .

Unabhängig davon, ob herstellungsbedingt oder ob ein zusätzliches wachsartiges Material eingesetzt wird, ist der Gehalt an 1-Monoacylglycerin vorzugsweise größer gleich 30 Gew.-%, bevorzugt größer gleich 50 Gew.-% und insbesondere größer gleich 70 Gew.-% sowie der Gehalt an Triacyclglycerin vorzugsweise kleiner 5 Gew.-% in der Gesamtmischung der eingesetzten wachsartigen Komponente (B).

Wesentlich für die erfindungsgemäßen Entschäumerpulver ist die Kombination des wachsartigen Additivs (B) und mindestens einem Polycarboxylat-Bindemittel (C), das einen pH von 3 oder weniger aufweist, wenn es in Wasser gelöst oder dispergiert ist.

Es hat sich gezeigt, dass diese Kombination essenziell für eine gute Lagerstabilität des erfindungsgemäßen Entschäumerpulvers in einem Waschpulver ist.

Bei dem Polycarboxylat-Bindemittel (C) handelt es sich um ein wasserlösliches oder wasserdispergierbares Polymer, Homopolymer, Copolymer oder einem Salz davon. Sie haben mindestens 60 Gewichtsprozent Segmente mit der allgemeinen Formel

(CR⁸₂-CR⁸₂)ₙ (V),

wobei
n einen Wert zwischen 10 und 100000, bevorzugt zwischen 20 und 10000, besonders bevorzugt zwischen 30 und 1000 annimmt,
R⁸ ausgewählt ist aus Wasserstoff, (gegebenenfalls substituierten) Kohlenwasserstoffresten mit 1 bis 30 Kohlenstoffatomen, Carboxylgruppen oder deren Salzen sowie Gruppierungen der allgemeinen Formel

   -C(O)-O-R⁹ (VI),

   -C(O)-N(R¹⁰)₂ (VII),
wobei
R⁹ einen gegebenenfalls funktionalisierten Kohlenwasserstoffrest mit 1 bis 30 Kohlenstoffatomen darstellt und R¹⁰ entweder Wasserstoff, der Rest R⁹ oder R¹¹-SO₃X bedeutet, wobei
R¹¹ ein zweiwertiger Alkylenrest mit 1 bis 12 Kohlenstoffatomen und
X ein Wasserstoffatom oder ein Kation darstellt,
mit der Maßgabe, dass mindestens 5 Mol-%, bevorzugt mindestens 10 Mol-%, besonders mindestens 15 Mol-% der Reste R⁸ saure Gruppe sind ausgewählt aus der Carboxylgruppe oder deren Salze und Gruppen, die eine Sulfonylgruppe oder deren Salze enthalten, vorzugsweise ausgewählt aus der Carboxylgruppe und deren Salze.

Die Reste R⁸ können gleich oder verschieden sein.

Beispiele für Reste R⁸ sind das Wasserstoffatom, monovalente (gegebenenfalls substituierte) Alkyl-, Aryl-, Aralkyl- und cycloaliphatische Kohlenwasserstoffreste, wie zum Beispiel Methyl-, Ethyl-, Heptyl-, Octyl-, 2-Ethylhexyl, Decyl-, Isodecyl-, Dodecyl-, Lauryl-, Myristyl-, Stearyl-, Phenyl-, (Sulfonyl)phenyl-, wie (4-Sulfonyl)phenyl- oder (2-Sulfonyl)phenyl-, 1-Naphthyl-, und (Sulfonyl)naphthylreste, Carboxyl-Gruppe oder Gruppierungen der Formeln (VI) und (VII).

Bevorzugte Reste R⁸ sind das Wasserstoffatom, der Methylrest, der Ethylrest, der (Sulfonyl)phenylrest, die Carboxyl-Gruppe oder Gruppierungen der Formeln (VI) und (VII).

Die Reste R⁹ können gleiche oder verschiedene monovalente Alkyl-, Aryl-, Aralkyl- und cycloaliphatische Kohlenwasserstoffreste sein.

Beispiele für Reste R⁹ sind die Methyl-, die Ethyl-, die n-Butyl-, die iso-Butyl-, die tert-Butyl-, die 2-Ethylhexyl-, die Lauryl-, die Stearyl-, die Benzyl-, die Isopropyl-, die Neopentyl-, die Cyclohexyl-, die 2-Hydroxyethyl- und die 2-Hydroxypropyl-Gruppe.

Die Reste R¹⁰ können gleich oder verschieden sein und entweder Wasserstoff, den Rest R⁹ oder R¹¹-SO₃X bedeuten.

Beispiele für den zweiwertigen Alkylenrest R¹¹ sind die Methylen-Gruppe, die 1,2-Ethylen-Gruppe, die 1,3-Propylen-Gruppe, die 1,2-Propylen-Gruppe oder die (2-Methyl-)1,2-propylen-Gruppe.

Beispiele für X sind das Wasserstoffatom oder ein Kation, wie das Natrium-, das Kalium-, das Calcium-, das Magnesium-, das Lithium-Kation oder Ammonium-Kationen, beispielsweise abgeleitet von Ammoniak, Monoethanolamin, Diethanolamin, Triethanolamin oder Isopropylamin.

Beispiele für bevorzugte Segmente entsprechend der allgemeinen Formel (V) sind:

(CH₂-C(CH₃)R¹²)ₙ (XIII)

(CH₂-C(C₂H₅)R¹²)ₙ (XV)

(CH₂-CHR¹²)ₙ (XVI)

(CHR¹²-CHR¹²)ₙ (XVII)

wobei R¹² ausgewählt ist aus den Gruppierungen

   -C(O)-O-H (XVIII),

   und

   -C(O)-NR¹⁰₂ (VII),
wobei R¹⁰ die oben dafür angegebene Bedeutung hat.

Die Carboxylgruppe (XVIII) wie auch die Sulfonylgruppe kann auch durch Basen, vorzugsweise Basen mit einem einfach positiv geladenen Kation, wie z. B. Alkalikationen oder Ammoniumkationen, teilweise neutralisiert sein, wobei dennoch die Bedingung, dass das Bindemittel (C) einen pH von 3 oder weniger aufweist, wenn es in Wasser gelöst ist, erfüllt bleiben muss.

Beispiele für Monomere, die zu diesen genannten Strukturen führen, sind Acrylsäure, Methacrylsäure, Ethacrylsäure, Maleinsäure, Fumarsäure, Itaconsäure, Aconitsäure, Mesaconsäure, Citraconsäure, Methylenmalonsäure, 4-Vinylbenzolsulfonsäure und 2-Acrylamido-2-methylpropansulfonsäure (AMPS).

Als Monomere sind auch Maleinsäureanhydrid oder Maleinsäureimid einsetzbar. In diesem Fall ist es bevorzugt, dass die eingebauten Anhydrid- oder Imidgruppen ganz oder teilweise mit Wasser, Alkoholen, Aminen oder Ammoniaklösung zu Carboxyl-, Ester- und/oder Amidgruppen umgesetzt werden.

Bevorzugte Beispiele für Monomere, die zu diesen genannten Strukturen führen, sind Acrylsäure, Methacrylsäure, Ethacrylsäure, Maleinsäure, Itaconsäure, Aconitsäure, Mesaconsäure, 2-Acrylamido-2-methylpropansulfonsäure (AMPS), Maleinsäureanhydrid und Maleinsäureimid.

Besonders bevorzugte Beispiele für Monomere, die zu diesen genannten Strukturen führen, sind Acrylsäure, Maleinsäure, 2-Acrylamido-2-methylpropansulfonsäure (AMPS) und Maleinsäureanhydrid.

Die Copolymerisation mit geringeren Mengen monomerer Materialien, die keine Carbonsäure enthalten, d.h. Methylacrylat, Ethylacrylat, n-Butylacrylat, iso-Butylacrylat, tert-Butylacrylat, 2-Ethylhexylacrylat, Laurylacrylat, Stearylacrylat, Benzylacrylat, Methylmethacrylat, Ethylmethacrylat, Isopropylmethacrylat, n-Butylmethacrylat, iso-Butylmethacrylat, tert-Butylmethacrylat, Neopentylmethacrylat, 2-Ethylhexylmethacrylat, Laurylmethacrylat, Stearylmethacrylat, Cyclohexylmethacrylat, Benzylmethacrylat, 2-Hydroxyethylacrylat, 2-Hydroxypropylacrylat, 2-Hydroxyethylmethacrylat, N,N-Dimethylaminoethylacrylat, N,N-Dimethylaminoethylmethacrylat, Acrylamid, Methacrylamid, Vinylmethyl, Vinylmethylether, Styrol und Ethylen, ist für die Verwendung der Polycarboxylate in den erfindungsgemäßen Schaumbekämpfungsmitteln nicht schädlich. Je nach Art des Polycarboxylats kann dieser Gehalt niedrig gehalten werden oder der Gehalt kann bis zu etwa 40 Gewichtsprozent des Gesamtpolymers oder Copolymers betragen.

Derartige und ähnliche Verbindungen (C), die im Rahmen der vorliegenden Erfindung eingesetzt werden können, sind bekannt und kommerziell erhältlich; beispielsweise Sokalan^{®} PA80S und Sokalan^{®} PA110S (BASF, Deutschland), die einen pH-Wert von etwa 1,5 aufweisen, Acryl-Malein-Copolymere, beispielsweise Sokalan^{®} CP12S (BASF, Deutschland) mit einem pH-Wert von etwa 1, und modifizierte Polyacrylsäurepolymere, zum Beispiel Sokalan^{®} CP10S und 13S (auch BASF, Deutschland), die einen pH-Wert von ca. 1,5 haben oder Aquatreat^{®} AR-540 (Fa. Nouryon, Copolymer aus Acrylsäure und sulfonierter Monomere).

Die erfindungsgemäßen Entschäumerpulver enthalten vorzugsweise Trägermaterialien (D), bei denen es sich um keine alkalischen Trägermaterialien handelt. Alkalische Trägermaterialien sind solche, bei denen beim Lösen oder Dispergieren in Wasser ein alkalischer pH-Wert, also ein pH-Wert von größer gleich 11 resultiert.

Dieser wird aus einer 0,02 Gew.-%igen Lösung oder einer 5 Gew.-%igen Aufschlämmung bestimmt. Es wurde gefunden, dass bei der Verwendung von überwiegend nicht alkalischen Trägermaterialien die Lagerstabilität der erfindungsgemäßen Entschäumerpulver im Waschpulver deutlich verbessert ist.

Bei den in dem erfindungsgemäßen Entschäumerpulver enthaltenen Trägermaterialien (D) kann es sich jeweils um eine Art einer solchen Komponente wie auch um ein Gemisch aus mindestens zwei Arten einer jeweiligen Komponente handeln.

Im Falle, dass als Trägermaterial nur eine Art einer Komponente eingesetzt wird, sollte es sich um ein nicht alkalisches Trägermaterial handeln.

Im Falle, dass als Trägermaterial mehrere Komponenten eingesetzt werden, sollte ein nicht alkalisches Trägermaterial die Hauptkomponente sein. Dies ist dann der Fall, wenn der Anteil an nicht alkalischen Trägermaterialien größer 50 Gew.-%, bevorzugt größer 60 Gew.-%, insbesondere bevorzugt größer 75 Gew.-% der Gesamtmenge an Trägermaterialien (D) ist.

Beispiele für nicht alkalische Trägermaterialien sind Phosphate, beispielsweise pulverisiertes oder granulares Natriumtripolyphosphat, Natriumsulfat, Natriumbicarbonat, Natriumcitrat, Natriumacetat oder Cellulosederivate wie Natriumcarboxymethylcellulose.

Beispiele für alkalische Trägermaterialien, die in Mengen kleiner 50 Gew.-%, bevorzugt kleiner 40 Gew.-%, insbesondere bevorzugt kleiner 25-Gew.-% eingesetzt werden können, sind Natriumcarbonat, Zeolithe, beispielsweise Zeolith A oder Zeolith X, Aluminosilikate oder Silikate, beispielsweise Magnesiumsilikat.

Besonders bevorzugt sind solche Trägermaterialien, die eine gute Wasserlöslichkeit aufweisen, wie beispielsweise Natriumsulfat, Natriumbicarbonat, Natriumcitrat, Natriumacetat und Cellulosederivate wie Natriumcarboxymethylcellulose.

Eine gute Wasserlöslichkeit im Sinne der vorliegenden Erfindung ist dann gegeben, wenn eine Löslichkeit in Wasser bei 25°C und einem Druck von 101,425 kPa von mindestens 3 Gewichtsprozenten gegeben ist.

Im Falle, dass als Trägermaterial nur eine Art einer Komponente eingesetzt wird, sollte es sich um ein gut wasserlösliches Trägermaterial handeln.

Im Falle, dass als Trägermaterial mehrere Komponenten eingesetzt werden, sollte ein gut wasserlösliches Trägermaterial die Hauptkomponente sein. Dies ist dann der Fall, wenn der Anteil an gut wasserlöslichen Trägermaterialien größer 50 Gew.-%, bevorzugt größer 60 Gew.-%, insbesondere bevorzugt größer 75 Gew.-% der Gesamtmenge an Trägermaterialien (D) ist.

Es hat sich gezeigt, dass die Wasserlöslichkeit bzw. Wasserdispergierbarkeit der erfindungsgemäßen Entschäumerpulver deutlich verbessert ist, wenn als Hauptkomponente ein wasserlösliches Trägermaterial eingesetzt wird.

Beispiele für gut wasserlösliche Trägermaterialien sind Phosphate, beispielsweise pulverisiertes oder granulares Natriumtripolyphosphat, Natriumsulfat, Natriumbicarbonat, Natriumcitrat, Natriumacetat oder Cellulosederivate wie Natriumcarboxymethylcellulose.

Beispiele für schlecht wasserlösliche Trägermaterialien, die in Mengen kleiner 50 Gew.-%, bevorzugt kleiner 40 Gew.-%, insbesondere bevorzugt kleiner 25-Gew.-% eingesetzt werden können, sind Zeolithe, beispielsweise Zeolith A oder Zeolith X, Aluminosilikate oder Silikate, beispielsweise Magnesiumsilikat.

Gegenstand der Erfindung ist weiterhin ein Verfahren zur Herstellung der Entschäumerpulver, indem eine Vormischung, vorzugsweise in Form einer Dispersion, insbesondere wässrigen Dispersion, aus Entschäumerformulierung (A), wachsartigem Additiv (B) und Bindemittel (C) hergestellt wird und diese Vormischung mit dem pulverförmigen Trägermaterial gemischt wird.

Die Vormischung wird vorzugsweise erhalten durch Dispergieren einer, vorzugsweise wässrigen, Emulsion oder Dispersion aus Entschäumerformulierung (A) und wachsartigem Additiv (B) in einer, vorzugsweise wässrigen, Lösung oder Dispersion des Bindemittels (C).

Die Herstellung der erfindungsgemäßen Entschäumerpulver kann beispielsweise dadurch erfolgen, dass eine Vormischung der Entschäumerformulierung (A) und des wachsartigen Additivs (B) mit dem pulverförmigen Trägermaterial (D) gemischt wird, und anschließend oder gleichzeitig eine Lösung oder Dispersion eines Bindemittels (C) eingearbeitet werden.

Alternativ ist es ebenfalls möglich, eine Emulsion oder Dispersion einer Vormischung der Entschäumerformulierung (A) und des wachsartigen Additivs (B) in einer Lösung oder Dispersion eines Bindemittels (C) in bekannter Weise herzustellen und diese anschließend auf das pulverförmige Trägermaterial (D) einzuarbeiten.

Diese Herstellmethode unter Verwendung einer Emulsion oder Dispersion einer Vormischung der Entschäumerformulierung (A) und des wachsartigen Additivs (B) in einer Lösung oder Dispersion eines Bindemittels (C) ist die favorisierte Vorgehensweise.

Die nach dem Mischen erhaltene pulverförmige Masse kann bei Bedarf noch getrocknet werden, so dass letztendlich ein rieselfähiges Pulver erhalten wird. Die Trocknung kann dabei unmittelbar sowohl im Mischer als auch nachfolgend in einem separaten Trockner bekannter Bauart, z. B. einem Bandtrockner, einem Sprühtrockner, einem Schneckentrockner, einem Paddeltrockner oder einem Adsorptionstrockner erfolgen. Vorzugsweise erfolgt die Trocknung bei einer Temperatur von 60°C bis 150°C.

Zur Herstellung der erfindungsgemäßen Entschäumerpulver können verschiedene bekannte Mischer verwendet werden, die vorzugsweise heizbar und/oder evakuierbar sind, um die Trocknung im selben Aggregat zu ermöglichen.

Beispiele für geeignete Mischer sind Pflugscharmischer, Z-Mischer, Schneckenextruder oder Planetenmischer. Der technologisch bedingte Restwassergehalt des erfindungsgemäßen Entschäumerpulvers liegt unter 10 Gew.-%, vorzugsweise unter 5 Gew.-%.

Vorzugsweise finden die erfindungsgemäßen Entschäumerpulver ihre Anwendung in Wasch- und Reinigungsmitteln.

Sie können jedoch überall eingesetzt werden, wo Schaum bekämpft oder verhindert werden soll. Ein Beispiel dafür sind pulverförmige Pflanzenschutzmittel, insbesondere solche, die größere Mengen an oberflächenaktiven Verbindungen enthalten. Die erfindungsgemäßen Entschäumerpulver können aber auch in chemischen Prozessen oder bei der Abwasserbehandlung vorteilhaft verwendet werden.

Die Dosierung der erfindungsgemäßen Entschäumerpulver erfolgt durch einfaches Mischen z. B. mit dem Waschmittel. Dies wird vorteilhaft zu dem Zeitpunkt durchgeführt, an dem das Wachmittel mit weiteren Bestandteilen, wie z. B. Enzymen, Bleichmitteln, gemischt wird. Es ist jedoch auch möglich das erfindungsgemäße Entschäumerpulver direkt in das schäumende Medium zu dosieren.

Die erfindungsgemäßen Entschäumerpulver werden vorzugsweise in tensidhaltigen, festen Medien, deren Einsatz in wässriger Umgebung zur Schaumbildung führt, verwendet, bevorzugt in Wasch- und Reinigungsmitteln, insbesondere in festen (pulverförmigen oder granularen) Wasch- und Reinigungsmitteln. Gegenstand der Erfindung sind daher Wasch- oder Reinigungsmittel enthaltend die erfindungsgemäßen Entschäumerpulver.

Die Bestimmung der Viskosität der einzelnen Komponenten, insbesondere Komponenten (Aa) erfolgt gemäß DIN 53019-1 (2008-09) (Grundlagen und Messgeometrie), DIN 53019-2 (2001-2)

(Viskosimeterkalibrierung und die Ermittlung der Messunsicherheit)und DIN 53019-3 (2008-09) (Messabweichungen und Korrektionen) bzw. gemäß DIN EN ISO 3219 (1994) (Kunststoffe - Polymere/Harze in flüssigem, emulgiertem oder dispergiertem Zustand - Bestimmung der Viskosität mit einem Rotationsviskosimeter bei definiertem Geschwindigkeitsgefälle) mit einem Kegel-Platte-Viskosimeter MCR 300 (Paar-Physika) bei 25°C und einem Schergefälle wie entsprechend angegeben.

Die Bestimmung der Viskosität der Entschäumerformulierung (A) erfolgt gemäß DIN EN ISO 3219 mit einem Kegel-Platte-Viskosimeter MCR 300 (Paar-Physika) bei 25°C und einem Schergefälle von 50/s.

Die Bestimmung der Menge an Monoacylglycerin bzw. Triacylglycerin in käuflich erwerblichen Monoacylglycerinen erfolgt mittels Flüssigchromatographie (HPLC) unter Verwendung einer Phenomenex Luna 5µm C5 100Å (250x4,6 mm) HPLC-Säule. Als mobile Phase wird ein Gemisch aus 0,05%iger wässriger Trifluoressigsäure und THF verwendet, wobei ein Gradient von 30% THF - 100% THF bei einem Fluss von 1,0 mL/min und einer Säulentemperatur von 30°C gefahren wird. Detektiert wird mittels eines evaporativen Lichtstreudetektors (ELSD) (1,4 SLM - 30° Neb - 30°C Evap - 50% Light Source Intensity). 10 mg der Proben werden in 10 ml THF gelöst, mit 1 ml Wasser versetzt und mit weiterem THF auf insgesamt 10 ml aufgefüllt. Es wird gegen chemisch reine Monoacylglycerine bzw. Triacylglycerine kalibriert.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanten bei Raumtemperatur ohne zusätzliche Heizung oder Kühlung einstellt, durchgeführt.

### Beispiel 1: Herstellung der Entschäumerformulierungen (A):

### Herstellung der Entschäumerformulierungen (A1):

82,3 Gew.-Teile eines Trimethylsiloxy-terminierten Methyloctylsiloxans der durchschnittlichen Kettenlänge von 55 mit einer Viskosität von 700 mPa·s (gemessen bei 25°C und einem Schergefälle von 10/s), 5 Teile einer pyrogenen Kieselsäure mit einer BET-Oberfläche von 300 m²/g (erhältlich unter dem Namen HDK^{®} T30 bei der Wacker Chemie AG München), 5 Teile eines Kohlenwasserstoffgemisch mit einem Siedebereich von 235-270°C (käuflich erhältlich unter der Bezeichnung Exxsol D 100 S bei Staub & Co Nürnberg, Deutschland), 5 Teile eines bei Raumtemperatur festen Siliconharzes bestehend aus folgenden Einheiten (nach ²⁹Si-NMR und IR-Analyse): 40 mol-% (CH₃)₃SiO_{1/2}-, 50 mol-% SiO_{4/2}-, 8 mol-% C₂H₅OSiO_{3/2}- und 2 mol-% HOSiO_{3/2}-, wobei dieses Harz eine gewichtsmittlere Molmasse von 7900g/mol (bezogen auf Polystyrolstandard) hat, und 0,7 Teile einer 20 Gew.-%igen Lösung von KOH in Glycerin wurden mit einem Dissolver vermischt und 4 Stunden auf 110°C erhitzt. Es wurde eine Entschäumerformulierung mit einer Viskosität von 35500 mPa·s (2,5 Upm, 25°C) erhalten.

### Herstellung der Entschäumerformulierungen (A2):

Die Herstellmethode zur Entschäumerformulierung (A1) wird wiederholt, wobei als Organopolysiloxan (Aa) 82,3 Gew.-Teile eines Trimethylsiloxy-terminierten Dodecylmethylsiloxans der durchschnittlichen Kettenlänge von 55 mit einer Viskosität von 1100 mPa·s (gemessen bei 25°C und einem Schergefälle von 10/s) eingesetzt wird. Es wurde eine Entschäumerformulierung (A2) mit einer Viskosität von 28700 mPa·s (2,5 Upm, 25°C) erhalten.

### Herstellung der Entschäumerformulierungen (A3):

85 Teile eines Trimethylsiloxy-terminierten Dimethylsiloxy-(alpha-Methylstyryl)Methylsiloxy-Methyloctylsiloxy-Copolymers der durchschnittlichen Kettenlänge von 60 und einem Verhältnis an Dimethylsiloxy-Einheiten zu (alpha-Methylstyryl)methyl-siloxy-Einheiten zu Methyloctylsiloxy von 10 zu 9 zu 1 mit einer Viskosität von 1500 mPa·s (gemessen bei 25°C und einem Schergefälle von 10/s), 5 Teile der pyrogenen Kieselsäure wie bei Entschäumerformulierung (A1), 5 Teile des Kohlenwasserstoffgemischs wie bei Entschäumerformulierung (A1), 5 Teile des Siliconharzes wie bei Entschäumerformulierung (A1) und 0,7 Teile einer 20 Gew.-%igen methanolischen KOH-Lösung wurden mit einem Dissolver vermischt und 4 Stunden auf 110°C erhitzt. Es wurde eine Entschäumerformulierung mit einer Viskosität von 9500 mPa·s (2,5 Upm, 25°C) erhalten.

### Beispiel 2: Herstellung der erfindungsgemäßen Entschäumerpulver:

### Herstellung des Entschäumerpulvers (P1):

10 Teile der Entschäumerformulierung (A1) werden mit 1,25 Teilen an Glycerinmonostearat (erhältlich unter dem Namen GMS90 bei der Fa. Faci mit einem Gehalt an Glycerintristearat von kleiner 1 Gew.-% (laut HPLC-Analytik)) bei einer Temperatur von 50°C miteinander gemischt. Die erhaltene Mischung wird in 2,5 Teilen einer auf 50°C erwärmten Polyacrylsäure-Lösung, die einen pH-Wert von 2,5 besitzt, (50 Gew.-%igen Lösung an Polyacrylsäure käuflich erhältlich als Sokalan^{®} CP 10 S bei der Fa. BASF) dispergiert. Es resultiert eine weiße, cremeartige fließfähige Dispersion. Die erhaltene Dispersion wird unter starker Scherung auf eine Mischung aus 72,5 Teilen Natriumsulfat und 15 Teilen Zeolith 4A gegeben. Nach Trocknung bei 80°C bis zur Gewichtskonstanz wird das erfindungsgemäße Entschäumerpulver (P1) erhalten.

### Herstellung des Entschäumerpulvers (P2):

Analog der Beschreibung zu Entschäumerpulver (P1) werden aus 3,75 Teilen Glycerinmonostearat GMS90, 2,5 Teilen Sokalan CP 10 S und 10 Teilen der Entschäumerformulierung (A1) eine Dispersion hergestellt. Durch Zugabe dieser Dispersion zu einer Mischung aus 70 Teilen Natriumsulfat und 15 Teilen Zeolith 4A und abschließendem Trocknen wird das Entschäumerpulver (P2) erhalten.

### Herstellung des Entschäumerpulvers (P3):

Analog der Beschreibung zu Entschäumerpulver (P1) werden aus 1,25 Teilen Glycerinmonostearat GMS90, 7,5 Teilen Sokalan CP 10 S und 10 Teilen der Entschäumerformulierung (A1) eine Dispersion hergestellt. Durch Zugabe dieser Dispersion zu einer Mischung aus 70 Teilen Natriumsulfat und 15 Teilen Zeolith 4A und abschließendem Trocknen wird das Entschäumerpulver (P3) erhalten.

### Herstellung des Entschäumerpulvers (P4):

Analog der Beschreibung zu Entschäumerpulver (P1) werden aus 3,75 Teilen Glycerinmonostearat GMS90, 7,5 Teilen Sokalan CP 10 S und 10 Teilen der Entschäumerformulierung (A1) eine Dispersion hergestellt. Durch Zugabe dieser Dispersion zu einer Mischung aus 70 Teilen Natriumsulfat und 15 Teilen Zeolith 4A und abschließendem Trocknen wird das Entschäumerpulver (P4) erhalten.

### Herstellung des Entschäumerpulvers (P5):

Analog der Beschreibung zu Entschäumerpulver (P1) werden aus 1,9 Teilen Glycerinmonostearat GMS90, 1,9 Teilen Paraffin (Schmelzbereich: 56-58°C), 8,0 Teilen Sokalan CP 10 S und 10 Teilen der Entschäumerformulierung (A1) eine Dispersion hergestellt. Durch Zugabe dieser Dispersion zu einer Mischung aus 67 Teilen Natriumsulfat und 15 Teilen Zeolith 4A und abschließendem Trocknen wird das Entschäumerpulver (P5) erhalten.

### Herstellung des Entschäumerpulvers (P6):

Analog der Beschreibung zu Entschäumerpulver (P1) werden aus 3,8 Teilen Glycerinmonostearat GMS90, 8,0 Teilen Sokalan CP 10 S und 10 Teilen der Entschäumerformulierung (A3) eine Dispersion hergestellt. Durch Zugabe dieser Dispersion zu einer Mischung aus 66 Teilen Natriumsulfat und 15 Teilen Zeolith 4A und abschließendem Trocknen wird das Entschäumerpulver (P6) erhalten.

### Herstellung des Entschäumerpulvers (P7):

Analog der Beschreibung zu Entschäumerpulver (P1) werden aus 3,8 Teilen Glycerinmonostearat GMS90, 8,0 Teilen Sokalan CP 10 S und 10 Teilen der Entschäumerformulierung (A2) eine Dispersion hergestellt. Durch Zugabe dieser Dispersion zu einer Mischung aus 66 Teilen Natriumsulfat und 15 Teilen Zeolith 4A und abschließendem Trocknen wird das Entschäumerpulver (P7) erhalten.

### Beispiel 3: Herstellung von nicht-erfindungsgemäßen Entschäumerpulver:

### Herstellung des Entschäumerpulvers (VP1):

3,8 Teile Glycerinmonostearat GMS90 und 10 Teile der Entschäumerformulierung (A1) werden miteinander bei 50°C gemischt und die warme Mischung wird auf eine Mischung aus 70 Teilen Natriumsulfat und 15 Teilen Zeolith 4A gegeben, so dass das (nicht-erfindungsgemäße) Entschäumerpulver (VP1) erhalten wird.

### Herstellung des Entschäumerpulvers (VP2):

Analog der Beschreibung zu Entschäumerpulver (P1) werden aus 3,8 Teilen Glycerinmonostearat GMS90, 11,1 Teilen einer Polyacrylsäure mit einem pH-Wert von 8,5 (45 Gew.-%ige Lösung an Polyacrylsäure käuflich erhältlich als Sokalan^{®} CP 10 bei der Fa. BASF) und 10 Teilen der Entschäumerformulierung (A1) eine Dispersion hergestellt. Durch Zugabe dieser Dispersion zu einer Mischung aus 66 Teilen Natriumsulfat und 15 Teilen Zeolith 4A und abschließendem Trocknen wird das (nicht-erfindungsgemäße) Entschäumerpulver (VP2) erhalten.

### Herstellung des Entschäumerpulvers (VP3):

Analog der Beschreibung zu Entschäumerpulver (P1) werden aus 3,8 Teilen Glycerinmonostearat GMS90, 8,0 Teilen eines Acrylsäure-Maleinsäure-Copolymers mit einem pH-Wert von 8,0 (40 Gew.-%ige Lösung an Acrylsäure-Maleinsäure-Copolymere käuflich erhältlich als Sokalan^{®} CP 5 bei der Fa. BASF) und 10 Teilen der Entschäumerformulierung (A1) eine Dispersion hergestellt. Durch Zugabe dieser Dispersion zu einer Mischung aus 67 Teilen Natriumsulfat und 15 Teilen Zeolith 4A und abschließendem Trocknen wird das (nicht-erfindungsgemäße) Entschäumerpulver (VP3) erhalten.

### Herstellung des Entschäumerpulvers (VP4):

Analog der Beschreibung zu Entschäumerpulver (P1) werden aus 3,8 Teilen Steareth-4, 8,0 Teilen Sokalan CP 10 S und 10 Teilen der Entschäumerformulierung (A1) eine Dispersion hergestellt. Durch Zugabe dieser Dispersion zu einer Mischung aus 66 Teilen Natriumsulfat und 15 Teilen Zeolith 4A und abschließendem Trocknen wird das (nicht-erfindungsgemäße) Entschäumerpulver (VP4) erhalten.

### Herstellung des Entschäumerpulvers (VP5):

Analog der Beschreibung zu Entschäumerpulver (P1) werden aus 10,0 Teilen Sokalan CP 10 S und 10 Teilen der Entschäumerformulierung (A1) eine Dispersion hergestellt. Durch Zugabe dieser Dispersion zu einer Mischung aus 70 Teilen Natriumsulfat und 15 Teilen Zeolith 4A und abschließendem Trocknen wird das (nicht-erfindungsgemäße) Entschäumerpulver (VP5) erhalten.

### Herstellung des Entschäumerpulvers (VP6):

Eine Mischung aus 3,8 Teilen Glycerinmonostearat GMS90 und 10 Teilen der Entschäumerformulierung (A1) werden zusammen mit 8,0 Teilen Sokalan CP 10 S auf Teilen Natriumcarbonat und abschließendem Trocknen wird das (nicht-erfindungsgemäße) Entschäumerpulver (VP6) erhalten.

### Herstellung des Entschäumerpulvers (VP7):

10 Teile der Entschäumerformulierung (A1) werden in 8,0 Teilen Sokalan CP 10 S dispergiert. Durch Zugabe dieser Dispersion zu 85 Teilen Zeolith 4A und abschließendem Trocknen wird das (nicht-erfindungsgemäße) Entschäumerpulver (VP7) erhalten.

### Herstellung des Entschäumerpulvers (VP8):

10 Teile der Entschäumerformulierung (A3) werden mit 3,8 Teilen Glycerinmonostearat GMS 90 gemischt, und die Mischung wird in 8,0 Teilen Sokalan CP 10 S dispergiert. Durch Zugabe dieser Dispersion zu 82 Teilen Mais-Stärke und abschließendem Trocknen wird das (nicht-erfindungsgemäße) Entschäumerpulver (VP8) erhalten.

### Beispiel 4:

### Prüfungen der Entschäumerwirksamkeit in der Waschmaschine

Zu 130 g eines Waschpulvers ECE-2 der Firma WFK wurden 0,5 Gew.-% an Entschäumerpulvern gegeben. Das Waschpulver wurde dann gemeinsam mit 3500 g sauberer Baumwollwäsche in eine Trommelwaschmaschine (Typ Miele Novotronik W918 ohne Fuzzy Logic) gegeben. Anschließend wird das Waschprogramm gestartet. Das Programm läuft bei einer Temperatur von 40°C und einer Wasserhärte von 3°GH ab. Die Schaumhöhe wird über einen Zeitraum von 55 Minuten aufgezeichnet. Aus den über den Gesamtzeitraum ermittelten Schaumnoten (0% kein Schaum messbar bis 100% Überschäumen) wird die durchschnittliche Schaumnote bestimmt. Je niedriger diese ist, desto wirksamer ist das Entschäumerpulver über den gesamten Zeitraum.

Lagertests im Waschpulvers ECE-2 werden wie folgt durchgeführt: 0,5 Gew.-% an Entschäumerpulvern werden zu 130 g des Waschpulvers gegeben und gut vermischt. Die Mischung wird in einen PE-Beutel mit einer Filmstärke von 50 µm gegeben, der PE-Beutel wird verschlossen und in einer Klimakammer für 4,8 oder 12 Wochen bei 35°C / 70% Luftfeuchtigkeit gelagert. Der Inhalt eines Beutels wird nach Lagerung wie oben in der Trommelwaschmaschine zur Überprüfung der Schaumkontrolle untersucht.

Jede Schaumnotenbestimmung ist ein Mittelwert aus mehreren Einzelmessungen.

**Tabelle 1:**

| Entschäumerwirkung von 0,05% der erfindungsgemäßen Entschäumerpulver im Waschpulver ECE-2 mit und ohne Lagerung: | | |
|---|---|---|
| Entschäumerpulver | durchschnittliche Schaumnote ohne Lagerung | Durchschnittliche Schaumnote nach 12 Wochen Lagerung |
| P1 | ++ | ++ |
| P2 | ++ | ++ |
| P3 | ++ | ++ |
| P4 | ++ | ++ |
| P5 | ++ | ++ |

| | | |
|---|---|---|
| 0 - 10% Schaum: ++ 11 - 20% Schaum: + 21 - 40% Schaum: o 41 - 60% Schaum: - > 60% Schaum: -- | | |

Sämtliche erfindungsgemäßen Entschäumerpulver weisen eine hervorragende Entschäumerwirkung im Waschpulver ECE-2 auf. Auch nach 12 Wochen Lagerung zeigen die Entschäumerpulver noch eine ausgezeichnete Entschäumerwirkung auf.

**Tabelle 2:**

| Entschäumerwirkung von 0,05% des nicht-erfindungsgemäßen Entschäumerpulvers VP1 im Waschpulver ECE-2 mit und ohne Lagerung: | | |
|---|---|---|
| Entschäumerpulver | durchschnittliche Schaumnote ohne Lagerung | Durchschnittliche Schaumnote nach 12 Wochen Lagerung |
| VP1 | ++ | -- |

Im Falle, dass keine Polyacrylsäure eingesetzt wird (wie in EP 0 210 731, EP 1 534 403 und EP 1 528 954 beschrieben), zeigt das (nicht-erfindungsgemäße) Antischaumpulver (VP1) zwar eine ausgezeichnete Entschäumerwirksamkeit ohne Lagerung auf. Nach Lagerung über 12 Wochen, bricht die Entschäumerwirksamkeit allerdings komplett ein.

Die Kombination aus saurer Polyacrylsäure und Glycerinmonostearat (wie in den erfindungsgemäßen Entschäumerpulvern P1 bis P5 eingesetzt) ist somit notwendig, um eine sehr gute Lagerstabilität zu erreichen.

**Tabelle 3:**

| Entschäumerwirkung von 0,05% der nicht-erfindungsgemäßen Entschäumerpulver VP2 und VP3 im Waschpulver ECE-2 mit und ohne Lagerung: | | |
|---|---|---|
| Entschäumerpulver | durchschnittliche Schaumnote ohne Lagerung | Durchschnittliche Schaumnote nach 8 Wochen Lagerung |
| VP2 | ++ | -- |
| VP3 | ++ | -- |

Im Falle, dass keine saure Polyacrylsäure eingesetzt wird, ist ebenfalls eine ausgezeichnete Entschäumerwirksamkeit ohne Lagerung vorhanden. Die Entschäumerwirksamkeit ist aber bereits nach 8 Wochen komplett eingebrochen.

Wird dagegen eine saure Polyacrylsäure eingesetzt (wie in den erfindungsgemäßen Entschäumerpulvern P1 bis P5), wird eine ausgezeichnete Lagerstabilität erreicht.

**Tabelle 4:**

| Entschäumerwirkung von 0,05% der nicht-erfindungsgemäßen Entschäumerpulver VP4 und VP5 im Waschpulver ECE-2 mit und ohne Lagerung: | | |
|---|---|---|
| Entschäumerpulver | durchschnittliche Schaumnote ohne Lagerung | Durchschnittliche Schaumnote nach 12 Wochen Lagerung |
| VP4 | + | -- |
| VP5 | + | -- |

Im Falle, dass statt des Glycerinmonostearats ein Stearylpolyether eingesetzt wird (VP4) oder auf das Glycerinmonostearat komplett verzichtet wird (VP5), zeigt sich bereits eine geringfügig schlechtere Wirksamkeit ohne Lagerung. Nach 12 Wochen Lagerung ist die Entschäumerwirksamkeit deutlich verringert.

Wird dagegen ein Glycerinmonostearat eingesetzt (wie in den erfindungsgemäßen Entschäumerpulvern P1 bis P5), wird sowohl eine hervorragende Wirksamkeit ohne Lagerung wie auch eine ausgezeichnete Lagerstabilität erreicht.

**Tabelle 5:**

| Entschäumerwirkung von 0,05% der nicht-erfindungsgemäßen Entschäumerpulver VP6 im Waschpulver ECE-2 mit und ohne Lagerung: | | |
|---|---|---|
| Entschäumerpulver | durchschnittliche Schaumnote ohne Lagerung | Durchschnittliche Schaumnote nach 4 Wochen Lagerung |
| VP6 | o | -- |

Im Falle, dass ausschließlich ein alkalischer Träger eingesetzt wird und dass das Polycarboxylat-Bindemittel und die Entschäumerformulierung nicht in Form einer wässrigen Vormischung hinzugegeben werden, liegt eine schwächere Entschäumerwirksamkeit ohne Lagerung vor. Nach 8 Wochen Lagerung ist zudem die Entschäumerwirksamkeit deutlich eingebrochen.

Ist dagegen der alkalische Träger keine Hauptkomponente (wie in den erfindungsgemäßen Entschäumerpulver P1 bis P5 mit ca. 18 Gew.-% bezogen auf die Gesamtmenge an Trägermaterialien) und wird das Polycarboxylat-Bindemittel zusammen mit der Antischaumformulierung als wässrige Vormischung auf die Trägermaterialien gegeben (wie in den erfindungsgemäßen Entschäumerpulver P1 bis P5), liegt eine ausgezeichnete Wirksamkeit ohne Lagerung vor, und die Entschäumerwirksamkeit ist auch nach 12 Wochen Lagerung noch vorhanden.

### Beispiel 5: Dispergierbarkeit der Entschäumerpulver:

In einer 250mL Glasflasche werden 150 g Wasser vorgelegt. Das Entschäumerpulver wird dazugegeben und mit einem Spatel umgerührt. Nach 10s und nach 60s erfolgt eine visuelle Auswertung.

**Tabelle 6:**

| Löslichkeit/Dispergierbarkeit von 0,1 Gew.-% an Entschäumerpulvern in Wasser nach 10 und 60 Sekunden: | | |
|---|---|---|
| Entschäumerpulver | Visuelle Auswertung nach 10 Sekunden | Visuelle Auswertung nach 60 Sekunden |
| P7 | Klare Lösung, wenig Bodensatz | Klare Lösung, Bodensatz weitestgehend aufgelöst |
| VP7 | Trübe Lösung, Bodensatz | Trübung hat sich nochmals verstärkt |
| VP8 | Geringe Trübung der Lösung, Bodensatz | Trübung der Lösung hat sich nochmals verstärkt |

Im Falle, dass ausschließlich Zeolith oder auch ausschließlich Stärke als Trägermaterial eingesetzt wird (VP7 und VP8), liegt eine geringe Löslichkeit vor. In beiden Fällen resultiert eine trübe Lösung, die sich mit der Zeit noch stärker eintrübt. Im Falle, dass ein wasserlösliches Trägermaterial (Natriumsulfat) als Hauptkomponente eingesetzt wird (P7) resultiert eine klare Lösung. Der zu Beginn auftretende Bodensatz (aber geringer als bei VP7 bzw. VP8) löst sich mit der Zeit weitestgehend auf.

Die Verwendung von wasserlöslichen Trägermaterialien als Hauptkomponente der erfindungsgemäßen Entschäumerpulver zeigt deutlich einen Vorteil gegenüber dem Stand der Technik.

## Patentansprüche

1. Entschäumerpulver, enthaltend
(A) 100 Gew.-Teile einer Entschäumerformulierung, enthaltend
(Aa) ein Polysiloxan enthaltend Einheiten der Formel (I)
R¹R²SiO_{2/2} (I),
worin
R¹ gleich oder verschieden sein kann und einen einwertigen, gegebenenfalls verzweigten, SiC-gebundenen Kohlenwasserstoffrest mit 1 bis 5 C-Atomen bedeutet,
R² gleich oder verschieden sein kann und einen einwertigen, gegebenenfalls verzweigten, SiC-gebundenen Kohlenwasserstoffrest mit 6 bis 30 C-Atomen bedeutet,
(Ab) ein Füllstoff,
(Ac) ein Organopolysiloxanharz aus Einheiten der allgemeinen Formel
R³ₐ(R⁴O)_{b}SiO_{(4-a-b)/2} (II),
worin
R³ gleich oder verschieden sein kann und einen einwertigen, gegebenenfalls substituierten, SiC-gebundenen Kohlenwasserstoffrest mit 1 bis 30 C-Atomen bedeutet,
R⁴ gleich oder verschieden sein kann und ein Wasserstoffatom oder einen einwertigen, gegebenenfalls substituierten Kohlenwasserstoffrest mit 1 bis 4 C-Atomen bedeutet,
a 0, 1, 2 oder 3 ist und
b 0, 1, 2 oder 3 ist,
mit der Maßgabe, dass die Summe a + b ≤ 3 ist und in weniger als 50% aller Einheiten der Formel **(II)** im Organopolysiloxanharz die Summe a + b = 2 ist,
(Ad) gegebenenfalls ein weiteres Organopolysiloxan bestehend aus Einheiten der Formel (III) und (IV)
R¹₂SiO_{2/2} (III),
R⁵R¹₂SiO_{1/2} (IV),
worin
R¹ die Bedeutung hat, wie zuvor beschrieben,
R⁵ gleich oder verschieden sein kann und R¹ oder -OR⁶ sein kann, wobei
R⁶ ein Wasserstoffatom oder einen einwertigen, gegebenenfalls substituierten Kohlenwasserstoffrest mit 1 bis 25 C-Atomen bedeutet,
(Ae) gegebenenfalls wasserunlösliche organische Verbindungen,
(Af) gegebenenfalls einen alkalischen oder sauren Katalysator oder dessen Umsetzungsprodukt mit den Komponenten (Aa) bis (Ad)
(B) 10 bis 45 Gew.-Teile bezogen auf 100 Gew.-Teile der Entschäumerformulierung (A) eines wachsartigen Additivs, enthaltend einen Monoester (B') aus Glycerin und einer Fettsäure,
das frei von einem Polysiloxan-haltigen Additiv ist und das weniger als 5 Gew.-% eines Triesters (B'') aus Glycerin und einer Fettsäure enthält,
(C) 10 bis 50 Gew.-Teile bezogen auf 100 Gew.-Teile der Entschäumerformulierung (A) eines Polycarboxylat-Bindemittels, das einen pH von 3 oder weniger aufweist, wenn es in Wasser gelöst ist.
(D) 120 bis 5000 Gew.-Teile bezogen auf 100 Gew.-Teile der Entschäumerformulierung (A) mindestens eines pulverförmigen Trägermaterials, mit der Maßgabe, dass das Trägermaterial weniger als 50 Gew.-% alkalisches Trägermaterial, vorzugsweise weniger als 40 Gew.-% alkalisches Trägermaterial, bevorzugt weniger als 25 Gew.-% alkalisches Trägermaterial enthält.

2. Entschäumerpulver nach Anspruch 1, **dadurch gekennzeichnet, dass** das Polysiloxan (Aa) ein Organopolysiloxan der Formel
R⁵R¹₂SiO- (SiR¹₂O)ₓ-(SiR¹R²O)_{y}-SiR¹₂R⁵ (VIII),
ist, wobei
R¹, R² und R⁵ die in Anspruch 1 dafür angegebene Bedeutung aufweisen,
x größer gleich 0 und durchschnittlich kleiner 200 ist und
y durchschnittlich größer 5 und kleiner 200 ist.

3. Entschäumerpulver nach Anspruch 1 oder 2, **dadurch gekennzeichnet, dass** als Füllstoffe (Ab) Kieselsäuren eingesetzt werden.

4. Entschäumerpulver nach Anspruch 1, 2 oder 3, **dadurch gekennzeichnet, dass** als Organopolysiloxanharze (Ac) MQ-Harze aus Einheiten der Formeln
SiO₂ (Q-Einheiten) und
R³₃SiO_{1/2} (M-Einheiten),
eingesetzt werden,
wobei das molare Verhältnis von M- zu Q-Einheiten dabei im Bereich von 0,5 bis 2,0 liegt, die MQ-Harze neben den M- und Q-Einheiten noch geringe Mengen an R³SiO_{3/2} oder
(R⁴O)SiO_{3/2} (T)-Einheiten oder R³₂SiO_{2/2} (D)-Einheiten, in Mengen von 0,01 bis 20 Mol%, bezogen auf die Summe aller Siloxaneinheiten, enthalten können und die MQ-Harze bis zu 10 Gew.-% freie Si-gebundene Hydroxy- oder Alkoxygruppen, wie Methoxy- oder Ethoxygruppen, enthalten können,
wobei R³ und R⁴ die in Anspruch 1 dafür angegebene Bedeutung haben.

5. Entschäumerpulver nach einem der Ansprüche 1 bis 4, **dadurch gekennzeichnet, dass** das wachsartige Additiv (B) größer gleich 30 Gew.-%, bevorzugt größer gleich 50 Gew.-% und insbesondere größer gleich 70 Gew.-% einen Monoester aus Glycerin und einer Fettsäure sowie kleiner 5 Gew.-% ein Triacyclglycerin in der Gesamtmischung der eingesetzten wachsartigen Komponente (B) enthält.

6. Entschäumerpulver nach einem der Ansprüche 1 bis 5, **dadurch gekennzeichnet, dass** es sich bei dem Monoester aus Glycerin und einer Fettsäure um Glycerinmonolaurat, Glycerinmonomyristat, Glycerinmonopalmitat oder Glycerinmonostearat handelt.

7. Entschäumerpulver nach einem der Ansprüche 1 bis 6, **dadurch gekennzeichnet, dass** das Polycarboxylat-Bindemittel (C) ein wasserlösliches oder wasserdispergierbares Homopolymer, Copolymer oder einem Salz davon ist, die mindestens 60 Gewichtsprozent Segmente der allgemeinen Formel
(CR⁸₂-CR⁸₂)ₙ (V),
aufweisen, wobei
n einen Wert zwischen 10 und 100000, bevorzugt zwischen 20 und 10000, besonders bevorzugt zwischen 30 und 1000 hat,
R⁸ ausgewählt ist aus Wasserstoff, (gegebenenfalls substituierte) Kohlenwasserstoffresten mit 1 bis 30 Kohlenstoffatomen, Carboxylgruppen oder deren Salzen sowie Gruppierungen der allgemeinen Formel
-C(O)-O-R⁹ (VI),
-C(O)-N(R¹⁰)₂ (VII),
wobei
R⁹ einen gegebenenfalls funktionalisierten Kohlenwasserstoffrest mit 1 bis 30 Kohlenstoffatomen darstellt und
R¹⁰ entweder Wasserstoff, der Rest R⁹ oder R¹¹-SO₃X bedeutet, wobei
R¹¹ ein zweiwertiger Alkylenrest mit 1 bis 12 Kohlenstoffatomen und
X ein Wasserstoffatom oder ein Kation darstellt,
mit der Maßgabe, dass mindestens 5 Mol-%, bevorzugt mindestens 10 Mol-%, besonders mindestens 15 Mol-% der Reste R⁸ saure Gruppe sind ausgewählt aus der Carboxylgruppe oder deren Salze und Gruppen, die eine Sulfonylgruppe oder deren Salze enthalten, vorzugsweise ausgewählt aus der Carboxylgruppe und deren Salze.

8. Entschäumerpulver nach einem der Ansprüche 1 bis 7, **dadurch gekennzeichnet, dass** das Polycarboxylat-Bindemittel (C) ein Homo- oder Copolymer aus Monomeren ausgewählt aus der Gruppe von Acrylsäure, Methacrylsäure, Ethacrylsäure, Maleinsäure, Itaconsäure, Aconitsäure, Mesaconsäure, 2-Acrylamido-2-methylpropansulfonsäure (AMPS), Maleinsäureanhydrid und Maleinsäureimid ist.

9. Entschäumerpulver nach einem der Ansprüche 1 bis 8, **dadurch gekennzeichnet, dass** als pulverförmige Trägermaterialien zu größer 50 Gew.-% nicht alkalische Trägermaterialien wie Phosphate, Natriumsulfat, Natriumbicarbonat, Natriumcitrat, Natriumacetat oder Cellulosederivate wie Natriumcarboxymethylcellulose eingesetzt werden.

10. Verfahren zur Herstellung der Entschäumerpulver nach einem der Ansprüche 1 bis 9, indem
eine Vormischung, vorzugsweise in Form einer Dispersion, aus Entschäumerformulierung (A), wachsartigem Additiv (B) und Bindemittel (C) hergestellt wird und
diese Vormischung mit dem pulverförmigen Trägermaterial gemischt wird.

11. Verfahren nach Anspruch 10, **dadurch gekennzeichnet, dass** die Vormischung in Form einer wässrigen Dispersion mit dem pulverförmigen Trägermaterial gemischt wird.

12. Verfahren nach Anspruch 10 oder 11, **dadurch gekennzeichnet, dass** das Entschäumerpulver anschließend getrocknet wird.

13. Waschmittel oder Reinigungsmittel enthaltend Entschäumerpulver nach einem der Ansprüche 1 bis 9 oder hergestellt nach Anspruch 10.

## Claims

1. Defoamer powders containing
(A) 100 parts by weight of a defoamer formulation containing
(Aa) a polysiloxane containing units of formula (I)
R¹R²SiO_{2/2} (I),
in which
R¹ may be identical or different and is a monovalent, optionally branched, SiC-bonded hydrocarbon radical having 1 to 5 carbon atoms,
R² may be identical or different and is a monovalent, optionally branched, SiC-bonded hydrocarbon radical having 6 to 30 carbon atoms,
(Ab) a filler,
(Ac) an organopolysiloxane resin composed of units of the general formula
R³ₐ(R⁴O)_{b}SiO_{(4-a-b)/2} (II),
in which
R³ may be identical or different and is a monovalent, optionally substituted, SiC-bonded hydrocarbon radical having 1 to 30 carbon atoms,
R⁴ may be identical or different and is a hydrogen atom or a monovalent, optionally substituted hydrocarbon radical having 1 to 4 carbon atoms,
a is 0, 1, 2 or 3 and
b is 0, 1, 2 or 3,
with the proviso that the sum total of a + b is ≤ 3 and in less than 50% of all units of formula **(II)** in the organopolysiloxane resin the sum total of a + b = 2,
(Ad) optionally a further organopolysiloxane consisting of units of formula (III) and (IV)
R¹₂SiO_{2/2} (III),
R⁵R¹₂SiO_{1/2} (IV),
in which
R¹ has the definition as described above,
R⁵ may be identical or different and may be R¹ or -OR⁶, where
R⁶ is a hydrogen atom or a monovalent, optionally substituted hydrocarbon radical having 1 to 25 carbon atoms,
(Ae) optionally water-insoluble organic compounds,
(Af) optionally an alkaline or acidic catalyst or the reaction product thereof with components (Aa) to (Ad)
(B) 10 to 45 parts by weight, based on 100 parts by weight of the defoamer formulation (A), of a waxy additive containing a monoester (B') of glycerol and a fatty acid
that is free of a polysiloxane-containing additive and that contains less than 5% by weight of a triester (B'') of glycerol and a fatty acid,
(C) 10 to 50 parts by weight, based on 100 parts by weight of the defoamer formulation (A), of a polycarboxylate binder that has a pH of 3 or less when it is dissolved in water,
(D) 120 to 5000 parts by weight, based on 100 parts by weight of the defoamer formulation (A), of at least one pulverulent carrier material, with the proviso that the carrier material contains less than 50% by weight of alkaline carrier material, preferably less than 40% by weight of alkaline carrier material, more preferably less than 25% by weight of alkaline carrier material.

2. The defoamer powders as claimed in claim 1, **characterized in that** the polysiloxane (Aa) is an organopolysiloxane of the formula
R⁵R¹₂SiO-(SiR¹₂O)ₓ-(SiR¹R²O)_{y}-SiR¹₂R⁵ (VIII),
where
R¹, R² and R⁵ have the definition given for them in claim 1, x is greater than or equal to 0 and on average less than 200 and
y is on average greater than 5 and less than 200.

3. The defoamer powders as claimed in claim 1 or 2, **characterized in that** silicas are used as fillers (Ab).

4. The defoamer powders as claimed in claim 1, 2 or 3, **characterized in that** the organopolysiloxane resins (Ac) used are MQ resins composed of units of the formulae
SiO₂ (Q units) and
R³₃SiO_{1/2} (M units),
where the molar ratio of M to Q units is in the range from 0.5 to 2.0, the MQ resins may also contain, in addition to the M and Q units, small amounts of R³SiO_{3/2} or (R⁴O)SiO_{3/2} (T) units or R³₂SiO_{2/2} (D) units, in amounts from 0.01 to 20 mol%, based on the sum total of all siloxane units, and the MQ resins may contain up to 10% by weight of free Si-bonded hydroxyl or alkoxy groups, such as methoxy or ethoxy groups,
where R³ and R⁴ have the definition given for them in claim 1.

5. The defoamer powders as claimed in any of claims 1 to 4, **characterized in that** the waxy additive (B) contains greater than or equal to 30% by weight, preferably greater than or equal to 50% by weight and in particular greater than or equal to 70% by weight of a monoester of glycerol and a fatty acid and less than 5% by weight of a triacylglycerol in the total mixture of the waxy component (B) used.

6. The defoamer powders as claimed in any of claims 1 to 5, **characterized in that** the monoester of glycerol and a fatty acid is glycerol monolaurate, glycerol monomyristate, glycerol monopalmitate or glycerol monostearate.

7. The defoamer powders as claimed in any of claims 1 to 6, **characterized in that** the polycarboxylate binder (C) is a water-soluble or water-dispersible homopolymer, copolymer or a salt thereof comprising at least 60 percent by weight of segments of the general formula
(CR⁸₂-CR⁸₂)ₙ (V),
where
n has a value between 10 and 100 000, preferably between 20 and 10 000, particularly preferably between 30 and 1000, R⁸ is selected from hydrogen, (optionally substituted) hydrocarbon radicals having 1 to 30 carbon atoms, carboxyl groups or salts thereof, and groups of the general formula
-C(O)-O-R⁹ (VI),
-C(O)-N(R¹⁰)₂ (VII),
where
R⁹ is an optionally functionalized hydrocarbon radical having 1 to 30 carbon atoms and
R¹⁰ is either hydrogen, the radical R⁹ or R¹¹-SO₃X,
where
R¹¹ is a divalent alkylene radical having 1 to 12 carbon atoms and
X is a hydrogen atom or a cation,
with the proviso that at least 5 mol%, preferably at least 10 mol%, particularly at least 15 mol% of the radicals R⁸ are acidic groups selected from the carboxyl group or salts thereof and groups containing a sulfonyl group or salts thereof, preferably selected from the carboxyl group and salts thereof.

8. The defoamer powders as claimed in any of claims 1 to 7, **characterized in that** the polycarboxylate binder (C) is a homo- or copolymer of monomers selected from the group of acrylic acid, methacrylic acid, ethacrylic acid, maleic acid, itaconic acid, aconitic acid, mesaconic acid, 2-acrylamido-2-methylpropanesulfonic acid (AMPS), maleic anhydride and maleimide.

9. The defoamer powders as claimed in any of claims 1 to 8, **characterized in that** non-alkaline carrier materials such as phosphates, sodium sulfate, sodium bicarbonate, sodium citrate, sodium acetate or cellulose derivatives such as sodium carboxymethyl cellulose are used to an extent of greater than 50% by weight as pulverulent carrier materials.

10. A process for producing the defoamer powders as claimed in any of claims 1 to 9, in that
a premix, preferably in the form of a dispersion, of defoamer formulation (A), waxy additive (B) and binder (C) is produced and
this premix is mixed with the pulverulent carrier material.

11. The process as claimed in claim 10, **characterized in that** the premix is mixed in the form of an aqueous dispersion with the pulverulent carrier material.

12. The process as claimed in claim 10 or 11, **characterized in that** the defoamer powder is subsequently dried.

13. A detergent or cleaning composition containing defoamer powder as claimed in any of claims 1 to 9 or produced as claimed in claim 10.

## Revendications

1. Poudre antimousse, contenant
(A) 100 parties en poids d'une formulation antimousse contenant
(Aa) un polysiloxane contenant des motifs de formule (I)
R¹R²SiO_{2/2} (I),
dans laquelle
R¹ peut être identique ou différent et signifie un radical hydrocarboné monovalent, le cas échéant ramifié, lié par SiC, comprenant 1 à 5 atomes de carbone,
R² peut être identique ou différent et signifie un radical hydrocarboné monovalent, le cas échéant ramifié, lié par SiC, comprenant 6 à 30 atomes de carbone,
(Ab) une charge,
(Ac) une résine d'organopolysiloxane constituée par des motifs de formule générale
R³ₐ(R⁴O)_{b}SiO_{(4-a-b)/2} ( II),
dans laquelle
R³ peut être identique ou différent et signifie un radical hydrocarboné monovalent, le cas échéant substitué, lié par SiC, comprenant 1 à 30 atomes de carbone,
R⁴ peut être identique ou différent et représente un atome d'hydrogène ou un radical hydrocarboné monovalent, le cas échéant substitué, comprenant 1 à 4 atomes de carbone,
a représente 0, 1, 2 ou 3 et
b représente 0, 1, 2 ou 3,
sous réserve que la somme a + b ≤ 3 et que, dans moins de 50% de tous les motifs de formule (II) dans la résine d'organopolysiloxane, la somme a + b = 2,
(Ad) le cas échéant un autre organopolysiloxane constitué par des motifs des formules (III) et (IV)
R¹₂SiO_{2/2} (III),
R⁵R¹₂SiO_{1/2} (IV),
dans lesquelles
R¹ présente la signification telle que décrite ci-dessus, R⁵ peut être identique ou différent et peut représenter R¹ ou -OR⁶, où
R⁶ signifie un atome d'hydrogène ou un radical hydrocarboné monovalent, le cas échéant substitué, comprenant 1 à 25 atomes de carbone,
(Ae) le cas échéant des composés organiques insolubles dans l'eau,
(Af) le cas échéant un catalyseur alcalin ou acide ou son produit de réaction avec les composants (Aa) à (Ad) (B) 10 à 45 parties en poids, par rapport à 100 parties en poids de la formulation antimousse (A), d'un additif cireux contenant un monoester (B') de glycérol et d'un acide gras,
qui est exempt d'additif contenant du polysiloxane et qui contient moins de 5% en poids d'un triester (B") de glycérol et d'un acide gras,
(C) 10 à 50 parties en poids, par rapport à 100 parties en poids de la formulation antimousse (A), d'un liant polycarboxylate présentant un pH inférieur ou égal à 3 lorsqu'il est dissous dans l'eau,
(D) 120 à 5000 parties en poids, par rapport à 100 parties en poids de la formulation antimousse (A), d'au moins un matériau support sous forme de poudre, sous réserve que le matériau support contient moins de 50% en poids de matériau support alcalin, de préférence moins de 40% en poids de matériau support alcalin, préférablement moins de 25% en poids de matériau support alcalin.

2. Poudre antimousse selon la revendication 1, **caractérisée en ce que** le polysiloxane (Aa) est un organopolysiloxane de formule
R⁵R¹₂SiO-(SiR¹₂O)ₓ-(SiR¹R²O)_{y}-SiR¹₂R⁵ (VIII),
dans laquelle
R¹, R² et R⁵ présentent la signification indiquée dans la revendication 1 pour ces radicaux,
x est supérieur ou égal à 0 et en moyenne inférieur à 200,
y est en moyenne supérieur à 5 et inférieur à 200.

3. Poudre antimousse selon la revendication 1 ou 2, **caractérisée en ce que** des silices sont utilisées comme charges (Ab).

4. Poudre antimousse selon la revendication 1, 2 ou 3, **caractérisée en ce qu'**on utilise, comme résines d'organopolysiloxane (Ac), des résines MQ constituées par des motifs des formules
SiO₂ (motifs Q) et
R³₃SiO_{1/2} (motifs M),
le rapport molaire des motifs M aux motifs Q étant situé dans la plage de 0,5 à 2,0, les résines MQ pouvant encore contenir, outre les motifs M et les motifs Q, de faibles quantités de motifs R³SiO_{3/2} ou (R⁴O)SiO_{3/2} (motifs T) ou RR³₂SiO_{2/2} (motifs D), en des quantités de 0,01 à 20% en mole, par rapport à la somme de tous les motifs siloxane, et les résines MQ pouvant contenir jusqu'à 10% en poids de groupes hydroxy ou alcoxy libres liés par Si, tels que des groupes méthoxy ou éthoxy,
R³ et R⁴ présentant la signification indiquée dans la revendication 1 pour ces radicaux.

5. Poudre antimousse selon l'une des revendications 1 à 4, **caractérisée en ce que** l'additif cireux (B) contient 30% en poids ou plus, de préférence 50% en poids ou plus et en particulier 70% en poids ou plus d'un monoester de glycérol et d'un acide gras ainsi que moins de 5% en poids d'un triacylglycérol dans le mélange total du composant cireux (B) mis en œuvre.

6. Poudre antimousse selon l'une des revendications 1 à 5, **caractérisée en ce que** le monoester de glycérol et d'un acide gras est le monolaurate de glycérol, le monomyristate de glycérol, le monopalmitate de glycérol ou le monostéarate de glycérol.

7. Poudre antimousse selon l'une des revendications 1 à 6, **caractérisée en ce que** le liant polycarboxylate (C) est un homopolymère, un copolymère soluble ou dispersible dans l'eau ou un sel de ceux-ci, qui présentent au moins 60% en poids de segments de formule générale
(CR⁸₂-CR⁸₂)ₙ (V),
dans laquelle
n présente une valeur entre 10 et 100 000, de préférence entre 20 et 10 000, de manière particulièrement préférée entre 30 et 1000,
R⁸ est choisi parmi l'hydrogène, les radicaux hydrocarbonés (le cas échéant substitués) comprenant 1 à 30 atomes de carbone, les groupes carboxyle ou leurs sels ainsi que les groupements des formules générales
-C(O)-O-R⁹ (VI),
-C(O)-N(R¹⁰)₂ (VII),
dans lesquelles
R⁹ représente un radical hydrocarboné, le cas échéant fonctionnalisé, comprenant 1 à 30 atomes de carbone et R¹⁰ représente soit hydrogène, soit le radical R⁹, soit R¹¹-SO₃X, où
R¹¹ représente un radical alkylène bivalent comprenant 1 à 12 atomes de carbone et
X représente un atome d'hydrogène ou un cation,
sous réserve qu'au moins 5% en mole, de préférence au moins 10% en mole, en particulier au moins 15% en mole des radicaux R⁸ sont des groupes acides, choisis parmi le groupe carboxyle ou ses sels et les groupes contenant un groupe sulfonyle ou ses sels, de préférence choisis parmi le groupe carboxyle et ses sels.

8. Poudre antimousse selon l'une des revendications 1 à 7, **caractérisée en ce que** le liant polycarboxylate (C) est un homopolymère ou un copolymère de monomères choisis dans le groupe constitué par l'acide acrylique, l'acide méthacrylique, l'acide éthacrylique, l'acide maléique, l'acide itaconique, l'acide aconitique, l'acide mésaconique, l'acide 2-acrylamido-2-méthylpropanesulfonique (AMPS), l'anhydride de l'acide maléique et l'imide de l'acide maléique.

9. Poudre antimousse selon l'une des revendications 1 à 8, **caractérisée en ce qu'**on utilise, en tant que matériaux support pulvérulents, à raison de plus de 50% en poids, des matériaux support non alcalins tels que des phosphates, le sulfate de sodium, le bicarbonate de sodium, le citrate de sodium, l'acétate de sodium ou des dérivés de cellulose tels que la carboxyméthylcellulose de sodium.

10. Procédé de préparation de la poudre antimousse selon l'une des revendications 1 à 9, dans lequel un prémélange, de préférence sous forme d'une dispersion, est préparé à partir de la formulation antimousse (A), de l'additif cireux (B) et du liant (C) et
ce prémélange est mélangé au matériau support sous forme de poudre.

11. Procédé selon la revendication 10, **caractérisé en ce que** le prémélange est mélangé sous forme d'une dispersion aqueuse avec le matériau support sous forme de poudre.

12. Procédé selon la revendication 10 ou 11, **caractérisé en ce que** la poudre antimousse est ensuite séchée.

13. Agent de lavage ou agent de nettoyage contenant une poudre antimousse selon l'une des revendications 1 à 9 ou préparée selon la revendication 10.
